# EUROPEAN PATENT APPLICATION

(11) **EP 2 154 813 A1**
(43) Date of publication of application: **17.02.2010**
(21) Application number: 08783874.4
(22) Date of filing: 05.08.2008
(51) Int. Cl.: H04L 9/00

(54) **METHOD AND NETWORK DEVICE FOR DEFENDING AGAINST INVALID MESSAGE ATTACK**

(30) Priority: 08.08.2007 CN 200710137563
(71) Applicant: Huawei Technologies Co., Ltd., Longgang District, Shenzhen Guangdong 518129 (CN)
(72) Inventor: ZHAO, Zhiwang c/o Huawei Technologies Co.Ltd., Longgang District 518129, Shenzhen (CN)
(74) Representative: Kreuz, Georg Maria
(86) International application number: PCT/CN2008/071881
(87) International publication number: WO 2009/018769

(57) **Abstract**

The present invention discloses a method and network device for defending against attacks of invalid packets, pertaining to the communication field. The method includes: by a network processor, receiving a packet, searching a service feature state table for matching information of the packet and judging whether the packet is valid according to a search result, and if the packet is invalid, discarding the packet. The network device includes a network processor. With the present invention, the network processor judges whether a packet is valid according to a service feature state table and discards invalid packets early according to the judgment so as to avoid the waste of device bandwidths on the invalid packets and increase the anti-attack performance and security performance of the device.

## Description

### Field of the Invention

The present invention relates to communications, and in particular, to a method and network device for defending against attacks of invalid packets.

### Background of the Invention

At present, a network device normally includes a network processor and a service processing layer. The network processor submits packets and forwards packets; and the service processing layer completes relevant service processing according to the packets sent by the network processor. Generally, the service layer of the network device explicitly records what types of packets the network device must process and what services are enabled on the network device and the network device is clear about services that must be submitted to the service processing layer.

With the development of the Internet, network environments are more and more complex and network attacks and virus attacks are more and more frequent so that damage to network devices is more and more serious. The Denial of Service (DoS) attack means attackers use large quantities of data packets or malformed packets to initiate connection attempts to a network device or request the network device for a response so that the network device is too overloaded to process legal tasks and as a result, service processing of the network device becomes abnormal. A network device generally defends against DoS attacks by means of traffic limiting, which limits the bytes of packets submitted to the network device within a unit time. This method can effectively relieve the impact of DoS attacks on the network device.
that traffic limiting alone cannot prevent invalid packets from being sent to the network device early and therefore cannot defend the network device effectively against attacks of invalid packets.

### Summary of the Invention

Embodiments of the present invention provide a method and network device for defending against attacks of invalid packets. The technical solution is as follows:
A method for defending against attacks of invalid packets includes:
   receiving, by a network processor, a packet, searching a service feature state table for matching information of the packet and judging whether the packet is valid according to a search result, and if the packet is invalid, discarding the packet.

A network device includes
a network processor, configured to: receive a packet, search a service feature state table for matching information of the packet and judge whether the packet is valid according to a search result, and if the packet is invalid, discard the packet.

The technical solution provides the following benefit:

The network processor judges whether a packet is valid according to a service feature state table and discards invalid packets early according to the judgment so as to avoid the waste of device bandwidths on the invalid packets and increase the anti-attack performance and security performance of the device.

### Brief Description of the Drawings

FIG. 1 is a flowchart of a method for defending against attacks of invalid packets according to a first embodiment of the present invention;
FIG. 2 shows a structure of a network device according to a second embodiment of the present invention; and
FIG. 3 shows a structure of another network device according to the second embodiment of the present invention.

### Detailed Description of the Invention

To make the technical solution, objectives and merits of the present invention clearer, the following describes the embodiments of the present invention in detail with reference to the accompanying drawings.

According to the embodiments of the present invention, the service processing layer and network processor of a network device interact with each other. The network processor judges whether a packet is valid and discards invalid packets early so as to enhance the performance of the network device in protecting against attacks.

### First Embodiment

The first embodiment of the present invention provides a method for defending against attacks of invalid packets. The method includes steps as follows:

A network processor, upon reception of a packet, searches a service feature state table for matching information of the packet and judges whether the packet is valid according to the search result; and if the packet is invalid, the network processor discards the packet.

The service feature state table may be generated by a service processing layer according to service processing information of the network device and then delivered to the network processor or the table may be manually configured; for example, an administrator configures the service feature state table for the network device according to service processing information of the network device.

Preferably, according to the embodiment of the present invention, the service processing layer of the network device delivers the service feature state table to the network processor. The service processing layer uniformly manages information of services enabled on the network device and defines the service feature code and state of packets carrying the service information.

For example, the service feature code of a Simple Network Management Protocol (SNMP) packet is a User Datagram Protocol (UDP) port number 161; the service feature code of a Dynamic Host Configuration Protocol (DHCP) packet is a UDP port number 67 or 68.

The service processing layer of the network device delivers the service feature state table to the network processor of the network device; the network device stores the service feature state table upon reception of the table.

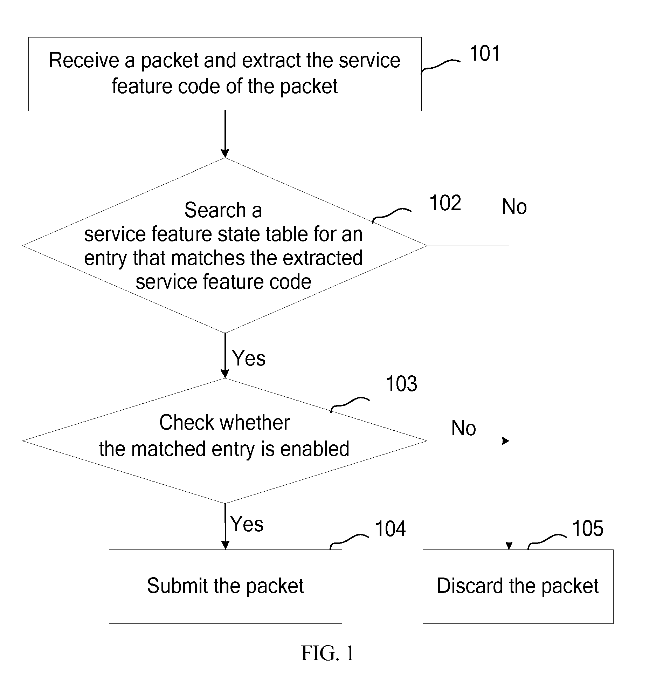

As shown in FIG. 1, the method for defending against attacks of invalid packets according to the first embodiment of the present invention includes the following steps:
Step 101: The network processor receives a packet and extracts the service feature code of the packet.
Step 102: The network processor searches the service feature state table for an entry that matches the extracted service feature code, and if such an entry is found, the process goes to step 103, or else to step 105.
Step 103: The network processor checks whether the state in the matched entry is enabled and if so, the process goes to step 104, or else to step 105.
Step 104: The network processor submits the packet to the service processing layer.
Step 105: The network processor discards the packet.

With the above method, the network processor only submits packets that match a service feature code in an enabled state. Packets that do not match a service feature code or match a disabled service feature code are discarded directly.

The service processing layer of the network device is aware of the change of the enabling state of a service via a configuration command. The service processing layer may check the configuration command in real time or at regular intervals (once a day or a week). When being aware that the enabling state of a service is changed, the service processing layer updates the enabling state of the service in the service feature state table and the delivers the updated service feature state table to the network processor of the network device immediately. Upon reception of the updated service feature state table, the network processor updates its service feature state table and judges whether a received packet is valid according to the updated service feature state table.

The service feature state table may also be updated by an administrator. The administrator adjusts service processing information of the network device at regular intervals (once a day or a week) so as to manually modify information in the service feature state table.

The network device in the embodiment of the present invention may be a firewall, a router, an Ethernet switch, or a broadband access network device but is not limited to these devices.

According to the embodiment, the network processor judges whether a packet is valid and discards invalid packets early so as to prevent the waste of network device bandwidths on the invalid packets and increase the anti-attack performance and security performance of the network device.

### Second Embodiment

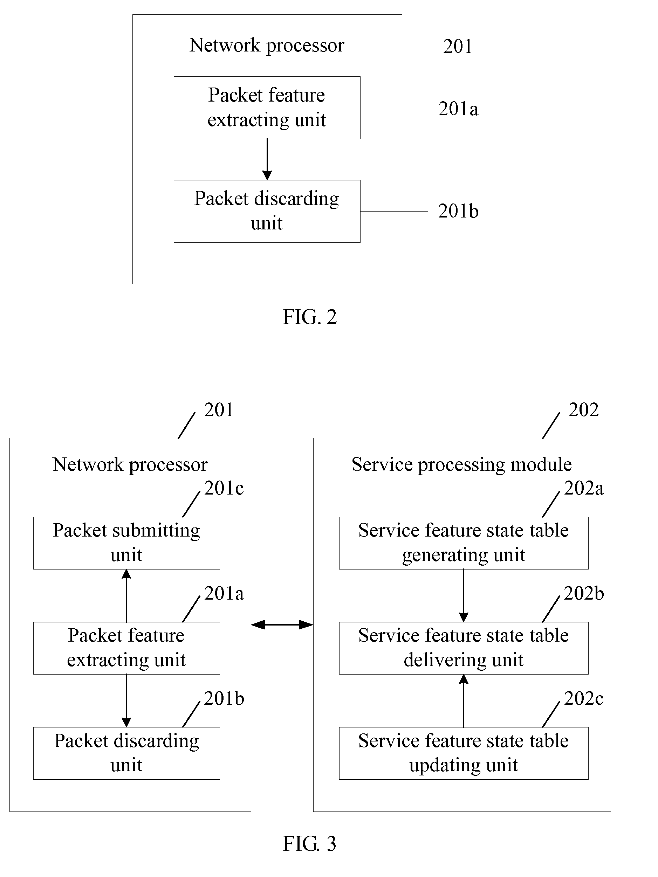

FIG. 2 shows a network device provided in an embodiment of the present invention. The network device includes:
a network processor 201, configured to: receive a packet, search a service feature state table for matching information of the packet and judge whether the packet is valid according to the search result, and if the packet is invalid, discard the packet.

The network processor 201 may include:
a packet feature extracting unit 201 a, configured to receive the packet and extract a service feature code of the packet; and a packet discarding unit 201b, according to to: search the service feature state table for an entry that matches the service feature code extracted by the packet feature extracting unit 201a and if no matched entry is found or the matched entry is disabled, determine that the packet is invalid and discard the packet.

Further, the network processor 201 may include:
a packet submitting unit 201 c, configured to submit packets whose service feature code matches an enabled entry in the service feature state table.

Accordingly, as shown in FIG. 3, the network device may further include:
a service processing module 202, configured to process packets submitted by the network processor 201.

The service processing module 202 may further include:
a service feature state table generating unit 202a, configured to generate a service feature state table according to the service processing information of the network device, where the service feature state table includes service feature codes and enabling states; and a service feature state table delivering unit 202b, configured to deliver the service feature state table generated by the service feature state table generating unit 202a to the network processor 201.

Further, the service processing module 202 may include:
a service feature state table updating unit 202c, configured to update the service feature state table according to a configuration command and instruct the service feature state table delivering unit 202b to deliver the updated service feature state table.

In the above embodiment, the network processor 201 discards invalid packets early so as to avoid the waste of network device bandwidths on the invalid packets and increase the anti-attack performance and security performance of the network device.

Because the network processor 201 interacts with the service processing module 202 in real time, the network processor 201 is aware whether the network device is able to process a certain type of service packets and also aware of the configuration state of the service. The network processor 201 submits packets only when the configuration state that matches the packets is enabled. In this way, the anti-attach performance and security performance of the network device are further improved.

It is understandable to those skilled in the art that all or part of the steps in the methods according to the preceding embodiments may be performed by hardware instructed by a program. The program may be stored in a computer readable storage medium, such as a Read-Only Memory/Random Access Memory (ROM/RAM), a magnetic disk, and a compact disk.

Although the present invention has been described through several exemplary embodiments, the invention is not limited to such embodiments. It is apparent that those skilled in the art can make various modifications and variations to the invention without departing from the scope of the present invention. The invention is intended to cover the modifications and variations provided that they fall in the scope of protection defined by the following claims or their equivalents.

## Claims

1. A method for defending against attacks of invalid packets, comprising:
receiving, by a network processor, a packet, searching a service feature state table for matching information of the packet and judging whether the packet is valid according to a search result, and if the packet is invalid, discarding the packet.

2. The method of claim 1, wherein the service feature state table comprises: service feature codes and enabling states.

3. The method of claim 2, wherein the searching the service feature state table for matching information of the packet and judging whether the packet is valid according to the search result comprises:
extracting a service feature code of the packet, searching the service feature state table for an entry that matches the service feature code of the packet, and if no matched entry is found or the matched entry is disabled, determining that the packet is invalid.

4. The method of claim 2, wherein the searching the service feature state table for matching information of the packet and judging whether the packet is valid according to the search result comprises:
extracting a service feature code of the packet, searching the service feature state table for an entry that matches the service feature code of the packet;
if no matched entry is found, determining that the packet is invalid; and
if a matched entry is found, checking whether the matched entry is enabled; if the matched entry is enabled, determining that the packet is valid and submitting the packet; and if the matched entry is disabled, determining that the packet is invalid.

5. The method of any one of claims 2-4, further comprising:
updating, by a service processing layer, the service feature state table according to a configuration command and delivering the updated service feature state table to the network processor; and
receiving, by the network processor, the updated service feature state table and updating the service feature state table of the network processor accordingly.

6. A network device, comprising:
a network processor, configured to: receive a packet, search a service feature state table for matching information of the packet and judge whether the packet is valid according to a search result, and if the packet is invalid, discard the packet.

7. The network device of claim 6, wherein the network processor comprises:
a packet feature extracting unit, configured to receive a packet and extract a service feature code of the packet; and
a packet discarding unit, configured to: search the service feature state table for an entry that matches the service feature code extracted by the packet feature extracting unit and if no matched entry is found or the matched entry is disabled, determine that the packet is invalid and discard the packet.

8. The network device of claim 6, wherein:
the network processor further comprises: a packet submitting unit, configured to submit packets whose service feature code matches an enabled entry in the service feature state table;
the network device further comprises: a service processing module, configured to process packets submitted by the network processor.

9. The network device of claim 8, wherein the service processing module comprises:
a service feature state table generating unit, configured to generate a service feature state table according to service processing information of the network device, wherein the service feature state table comprises service feature codes and enabling states; and
a service feature state table delivering unit, configured to deliver the service feature state table generated by the service feature state table generating unit to the network processor.

10. The network device of claim 9, wherein the service processing module further comprises:
a service feature state table updating unit, configured to: update the service feature state table according to a configuration command and notify the service feature state table delivering unit to deliver the updated service feature state table.
